# EUROPEAN PATENT SPECIFICATION

(11) **EP 0 587 293 B1**
(45) Date of publication and mention of the grant of the patent: **27.03.1996**
(21) Application number: 93306089.9
(22) Date of filing: 02.08.1993
(51) Int. Cl.: C09D 5/00, C09D 7/12, C08K 3/04, C08J 7/04

(54) **Anti-fogging coating**
Das Beschlagen verhindernde Beschichtung
Revêtement anti-brié

(30) Priority: 12.08.1992 GB 9217094
(43) Date of publication of application: 16.03.1994
(73) Proprietor: COURTAULDS TEXTILES (HOLDINGS) LIMITED, Walkden, Worsley, Manchester M28 5WR (GB)
(72) Inventor: Fung, Walter, Worsley, Manchester M28 5DJ (GB)
(74) Representative: Dealtry, Brian

(56) References cited:
- DE-B- 3 023 023
- US-A- 4 954 469
- DATABASE WPI Week 9216, Derwent Publications Ltd., London, GB; AN 92-128905 & JP-A-4 073 277 (TOYOTA) 9 March 1992
- DATABASE WPI Week 9216, Derwent Publications Ltd., London, GB; AN 92-128891 & JP-A-4 073 263 (KAWASHIMA ORIMONO KK) 9 March 1992
- DATABASE WPI Week 9018, Derwent Publications Ltd., London, GB; AN 90-134563 & JP-A-2 080 315 (OSAKA GAS KK) 20 March 1990
- DATABASE WPI Week 9236, Derwent Publications Ltd., London, GB; AN 92-295093 & JP-A-4 201 444 (KAWASHIMA ORIMONO KK) 22 July 1992
- DATABASE WPI Week 9216, Derwent Publications Ltd., London, GB; AN 92-128905.
- DATABASE WPI Week 9216, Derwent Publications Ltd., London, GB; AN 92-128891.
- DATABASE WPI Week 9018, Derwent Publications Ltd., London, GB; AN 90-134563.
- DATABASE WPI Week 9236, Derwent Publications Ltd., London, GB; AN 92-295093.

## Description

The present invention relates to a coating for a carrier which is capable of adsorbing volatile components and in particular to a coating for prevention of fogging in vehicles. The invention also relates to a coating mixture for forming the coating. The invention also relates to an anti-static textile material.

In modern automobiles large volumes of plastics are used in the interior and this gives rise to a phenomenon referred to as fogging i.e. the reduction in visibility through the windows of a vehicle caused by the deposit of condensates on the window surface.

The condensates derive from volatile components which vaporise out of the plastics materials or resins used in the interior.

These plastics materials may be in many different forms and the volatile components may vary widely depending upon the type of plastics material and its processing into components.

For example, covering fabrics used for example on the vehicle seats, door or pillars, carpets etc may have residual yarn spinning lubricants, weaving and/or knitting lubricants, anti-static finishes, softening agents etc. Specifically these volatile components for example may be mineral oils, alkylene oxide condensates of fatty acids (as used in lubricants), alkali sulphonates, fatty alcohol ethylene oxide condensates, organic esters and polyethylene emulsions as used in anti-static agents.

Plastics foams are commonly used in for example seating or padding for linings. Volatile components vaporising from the foam may be for example low molecular weight polymers and lactones.

It is common practice to use polyvinylchloride as a covering material on for example the door casing, pillars, dashboard etc. Plasticisers such as di-2-ethylhexylphthalate or phthalates of linear alcohols reside in the polymerised polyvinylchloride component and thereby provide a source of volatile component.

Other sources of volatile components include adhesives used for bonding the linings, etc.

It is an aim of the present invention to provide a coating which prevents or substantially reduces fogging caused by vaporisation of volatile components in plastics materials or resins used in a vehicle interior.

According to one aspect of the present invention there is provided a coating for a carrier, the coating comprising a solid adsorbent constituent and a binder for adhering the adsorbent constituent to the carrier, the adsorbent constituent including activated carbon, the activated carbon forming 20% - 90% by weight of the coating adhered to the carrier, the activated carbon containing a meso-pore carbon which forms at least 40% by weight of the total weight of activated carbon.

Preferably the activated carbon forms 50-90% by weight of the coating, more preferably the activated carbon forms between 50% to 80% by weight of the coating.

Preferably the binder comprises a natural or synthetic polymer or copolymer having adhesive properties. The polymer or co-polymer may or may not be polymerised or cured in the coating.

Suitable polymers for the binder may be an acrylic resin, polyvinylalcohol, polyvinylchloride, polyacrylonitile, styrene butadiene rubber or polyurethane or may be a co-polymer of these polymers.

For the prevention or reduction of fogging in a vehicle, the carrier may be any suitable component found in the interior of the vehicle which may be coated with the coating of the present invention. Preferably the coating is applied on an interior surface of the vehicle component and so the covering surface of the component is preferably permeable. The coating itself is also preferably permeable to enable the volatile components to be adsorbed.

Preferably the carrier which is coated has a large surface area within the vehicle interior. Accordingly the vehicle component defining the carrier is preferably a lining such as a roof or door pillar lining or is the seating or carpet. In the case of a lining for seating the coating may be applied to the covering material, internal wadding or foam. The coating of a component having a large surface area enables volatile components to be quickly adsorbed.

The choice of a suitable binder can depend upon the nature of the carrier. For example, for a coating to be applied to a seat covering fabric or seat foam, a resiliently flexible polymer such as polyurethane is preferably used.

The activated carbon filler may also contain
a carbon having a predominance of micropores, a carbon having a predominance mesopores and/or a carbon having a predominance of macropores.

In this specification, micropores are pores of a size below 1nm, mesopores are pores ranging from 1 to 25 nm and macro pores are pores above 25nm.

Preferably, the micropore carbon is derived from nut shells, such as coconut; the mesopore carbon is derived from coal and the macropore carbon is derived from wood.

The weight proportions of the carbons in the carbon filler expressed as a percentage by weight of the total weight of carbon filler is preferably micropore carbon 0% to 40%, mesopore carbon 40% to 80% and macropore carbon 0% to 40%, more preferably 20%-35% micropore carbon, 40% to 70% mesopore carbon and 20% to 35% macropore carbon.

Preferably the particle size of the carbon filler is such as to provide a surface area of between 500-1500 sqm/g, more preferably 500-1400 sqm/g.

Preferably the coating is formed by mixing natural or synthetic latex or emulsion containing a polymeric phase for forming the binder with a suspension of activated carbon to form a coating mixture for application to the carrier.

Preferably the polymeric phase form about 40% by weight of the total weight of the latex or emulsion.

Preferably the continuous phase of the latex or emulsion is water but it is envisaged that the continuous phase may be an organic solvent.

The coating mixture may be applied to the carrier by any conventional means, for example by spraying or by use of a doctoring blade. On certain carriers such as plastics foams, non-woven materials used for example as wadding, or fabrics, the coating may be applied, for example by emersion in a bath, so as to impregnate the carrier. In order to provide the coating mixture with the correct viscosity a compatible thickening agent may be added in sufficient proportion to provide a desired viscosity. For example, for a coating mixture having a polyurethane resin latex or emulsion wherein the resin forms about 40% by weight of the emulsion, a polyurethane thickener in the form of an emulsion (containing about 24-28% by weight of solids) is added in a proportion which represents about 2 to 4% by weight of the coating mixture in order to render the coating mixture suitable for application to the external face of a carrier by a doctoring blade. If the latex or emulsion contains an acrylic polymeric phase, then the thickener would be an acrylic thickener.

Preferably the weight/surface area of the coating is not too high so as to reduce the porosity of the coating to an unacceptable level or in the case of application to fabrics to detrimentally affect the handle of the fabric.

As indicated above the carrier to be coated may be for example fabric which may form the vehicle seat coverings or exterior of vehicle linings, or for example may be the plastics foam which forms the interior of the vehicle seat or linings. The fabric may be woven, non woven or knitted using cellulosic fibres, polyester, wool, acrylic, polyamide or polypropylene yarns. The fabric weight is preferably 200-650 g/sqm, more preferably 220-450 g/sqm. The fabric may be flat or may have a surface pile. The foam may be a polyurethane foam.

The coating may be applied directly to the yarn/fibres prior to making up the fabric. In such a case the carrier is defined by the yarns/fabrics.

In the case of carriers formed of a flexible material, such as for example seat fabric, the coating is preferably applied to a face of the carrier so as to have a weight to surface area ratio of between 20 to 150 g/sqm, more preferably 90 to 140 g/sqm.

The carrier may also be a composite of say a face fabric to which a wadding made of say non-woven material or plastics foam is laminated. The wadding only may be coated with the coating mixture by spraying or impregnation. Such a composite carrier could be used as a seating fabric, a headliner etc.

### EXAMPLE

### Preparation of a coating mix

A weighed amount of activated carbon was prepared by addition of water in a beaker and stirring steadily until the carbon powder had been wetted in a black, uniform liquid was produced. An amount of water up to the weight of the activated carbon was sometimes needed to obtain a uniform mix.

A quantity of polyurethane resin emulsion (40% active matter) was stirred in until a uniform mix was obtained, usually about equal in weight to the activated carbon.

Finally, a small quantity of polyurethane thickener (usually 2-4 parts by weight) was stirred carefully in and the whole mixture stirred until a coating mixture of the correct viscosity suitable for fabric coating was obtained.

### Preparation of coated fabric carrier

The coating mixture obtained above was then coated on to the back of a flat woven polyester automotive fabric suitable for use as a seat cover. Typical laboratory size samples are about A4 size (30x20cm). The fabric sample was then dried in a laboratory oven for 3 minutes at 150C. This heat treatment also effects cross-linking of polyurethane resin.

Typical (dry) add-on is about 90-140 g/sqm. Weight of actual activated carbon in the coating varies from 50% to 80% by weight.

It is envisaged that the fabric may be constructed to also provide an antistatic effect.

In this respect the present invention also provides an anti-static fabric having a coating as defined above coating one surface of the fabric, the fabric containing electrically conductive yarns which provide an electrically conductive path between the front and rear faces of the fabric. For such a coating the binder is preferably formed by a cured or polymerised polymer or co-polymer.

Since the coating contains activated carbon, the coating is itself conductive and enables conduction of electricity across the face of the fabric.

Preferably the fabric is a woven, a non woven or a knitted fabric and the conductive yarns incorporated in the fabric are preferably a carbon coated plastics filament yarn or a plastics filament yarn incorporating a conductive strip formed for example from a metallic compound. An example of a carbon coated yarn is Resistat Nylon 6 F901 carbon coated 20/1 continuous monofilament yarn as produced by BASF and an example of a yarn incorporating a conductive strip is Belltron type 638 20/3 continuous filament yarn as produced by Kanebo.

For a flat woven fabric the conductive yarn forms up to about 1% by weight of the fabric, more preferably about up to 0.5% by weight.

For a raised knitted fabric the conductive yarn forms up to about 3 % by weight of the fabric, more preferably about up to 2% by weight.

For a cut pile woven fabric such as velvet, the electrically conductive yarn is located at least in the pile forming yarns and, in the weave, extend to the rear face coated by said cured resin coating.

The weight of conductive yarn in the cut pile preferably represents at least 0.35% by weight of the total weight of the pile, more preferably represent 0.35 to 0.50% by weight of the total weight of the pile.

The conductive yarns are incorporated in the fabric so as to be evenly distributed throughout the fabric. In weaving this may be achieved by locating one or more conductive yarn ends at regular intervals across the warp sheet, say for example every 1 cm. In knitting, even distribution through the fabric may be achieved by ply twisting the conductive yarns with the main yarns.

## Claims

1. A coating for a carrier, the coating comprising a solid adsorbent constituent and a binder for adhering the adsorbent constituent to the carrier, the adsorbent constituent including activated carbon, the activated carbon forming 20% - 90% by weight of the coating adhered to the carrier, the activated carbon containing a meso-pore carbon which forms at least 40% by weight of the total weight of activated carbon.

2. A coating according to claim 1 wherein the activated carbon forms 50-90% by weight of the coating, more preferably 50-80% by weight of the coating.

3. A coating according to claim 1 or 2 wherein the activated carbon further includes one or both of the following:- a micro-pore carbon having a predominance of micropores, or a macro-pore carbon having a predominance of macropores.

4. A coating according to claim 3 wherein the activated carbon comprises a mixture of the micropore, mesopore and macropore carbons in the following proportions expressed as a percentage by weight of the total weight of activated carbon in the coating; micropore carbon 0% to 40%, mesopore carbon 40% to 80% and macropore carbon 0% to 40%.

5. A coating according to any preceding claim wherein the particle size of the activated carbon is such as to provide a surface area of between 500 - 1500 sqm/g, more preferably 500 - 1400 sqm/g.

6. A coating according to any preceding claim wherein the binder comprises a natural or synthetic polymer or co-polymer which may or may not be polymerised or cured in the coating.

7. A coating according to any preceding claim which is permeable.

8. A carrier having a coating according to any preceding claim.

9. A carrier according to claim 8 which forms part of the interior of a motor vehicle.

10. A coating mixture for forming the coating according to any of claims 1 to 7, the coating mixture comprising a natural or synthetic latex or emulsion containing a polymeric phase for forming a binder and a suspension of activated carbon, at least 40% by weight of the activated carbon comprising meso-pore carbon.

## Patentansprüche

1. Überzug für einen Träger, wobei der Überzug einen festen Adsorptionsmittelbestandteil und ein Bindemittel zum Befestigen des Adsorptionsmittelbestandteils an dem Träger umfaßt, der Adsorptionsmittelbestandteil Aktivkohle beinhaltet, die Aktivkohle 20 bis 90 Gew.-% des an dem Träger haftenden Überzugs ausmacht und die Aktivkohle einen meso-porigen Kohlenstoff, der mindestens 40 Gew.-% des Gesamtgewichts der Aktivkohle ausmacht, enthält.

2. Überzug nach Anspruch 1, wobei die Aktivkohle 50 bis 90, vorzugsweise 50 bis 80 Gew.-% des Überzugs ausmacht.

3. Überzug nach Anspruch 1 oder 2, wobei die Aktivkohle weiterhin einen oder beide der folgenden Bestandteile enthält: mikroporiger Kohlenstoff mit vorherrschenden Mikroporen oder makroporiger Kohlenstoff mit vorherrschenden Makroporen.

4. Überzug nach Anspruch 3, wobei die Aktivkohle ein Gemisch aus mikroporigen, meso-porigen und makroporigen Kohlenstoffsorten in folgenden Mengenanteilen (ausgedrückt als gewichtsprozentualer Anteil des Gesamtgewichts der Aktivkohle im Überzug): mikroporiger Kohlenstoff 0 bis 40%, meso-poriger Kohlenstoff 40 bis 80% und makroporiger Kohlenstoff 0 bis 40% umfaßt.

5. Überzug nach einem der vorhergehenden Ansprüche, wobei die Teilchengröße der Aktivkohle derart ist, daß eine Oberfläche zwischen 500 und 1500, vorzugsweise 500 und 1400 m/g bereitgestellt wird.

6. Überzug nach einem der vorhergehenden Ansprüche, wobei das Bindemittel ein natürliches oder synthetisches Polymer oder Copolymer, das im Überzug gegebenenfalls polymerisiert oder gehärtet wird, umfaßt.

7. Überzug nach einem der vorhergehenden Ansprüche, der permeabel ist.

8. Träger mit einem Überzug nach einem der vorhergehenden Ansprüche.

9. Träger nach Anspruch 8, der einen Teil des Inneren eines Kraftfahrzeugs bildet.

10. Überzugsgemisch zur Ausbildung des Überzugs nach einem der Ansprüche 1 bis 7, umfassend eine(n) natürliche(n) oder synthetische(n) Latex oder Emulsion mit einer polymeren Phase zur Bildung eines Bindemittels und eine Suspension von Aktivkohle, wobei mindestens 40 Gew.-% der Aktivkohle aus meso-porigem Kohlenstoff bestehen.

## Revendications

1. Revêtement pour un support, le revêtement comprenant un constituant adsorbant solide et un liant pour faire adhérer le constituant adsorbant au support, le constituant adsorbant incluant du charbon actif, le charbon actif formant 20 % à 90 % en poids du revêtement adhérant au support, le charbon actif contenant un charbon à mésopores qui forme au moins 40 % en poids du poids total du charbon actif.

2. Revêtement selon la revendication 1, dans lequel le charbon actif forme 50 à 90 % en poids du revêtement, de préférence encore 50 à 80 % en poids du revêtement.

3. Revêtement selon la revendication 1 ou 2, dans lequel le charbon actif inclut en outre un ou les deux des suivants : un charbon à micropores ayant une prédominance de micropores, ou un charbon à macropores ayant une prédominance de macropores.

4. Revêtement selon la revendication 3, dans lequel le charbon actif comprend un mélange des charbons à micropores, mésopores et macropores dans les proportions suivantes, exprimées en pourcentage en poids du poids total du charbon actif dans le revêtement ; charbon à micropores 0 % à 40 %, charbon à mésopores 40 % à 80 % et charbon à macropores 0 % à 40 %.

5. Revêtement selon l'une quelconque des revendications précédentes, dans lequel la taille de particules du charbon actif est telle qu'elle fournisse une surface spécifique de 500 à 1500 m/g, de préférence encore 500 à 1400 m/g.

6. Revêtement selon l'une quelconque des revendications précédentes, dans lequel le liant comprend un polymère ou copolymère naturel ou synthétique qui peut ou non être polymérisé ou durci dans le revêtement.

7. Revêtement selon l'une quelconque des revendications précédentes, qui est perméable.

8. Support ayant un revêtement selon l'une quelconque des revendications précédentes.

9. Support selon la revendication 8, qui forme une partie de l'intérieur d'un véhicule à moteur.

10. Mélange de revêtement pour former le revêtement selon l'une quelconque des revendications 1 à 7, le mélange de revêtement comprenant un latex ou une émulsion, naturels ou synthétiques, contenant une phase polymère pour former un liant et une suspension de charbon actif, au moins 40 % en poids du charbon actif comprenant du charbon à mésopores.
